# EUROPÄISCHE PATENTSCHRIFT

(11) **EP 2 184 192 B1**
(45) Veröffentlichungstag und Bekanntmachung des Hinweises auf die Patenterteilung: **02.01.2013**
(21) Anmeldenummer: 09013846.2
(22) Anmeldetag: 04.11.2009
(51) Int. Cl.: B60J 7/12

(54) **Faltverdeck mit einem Verdeckbezug für einen Personenkraftwagen**
Collapsible roof with a soft top cover for a passenger vehicle
Toit escamotable doté d'un revêtement de capote pour un véhicule de transport de passagers

(30) Priorität: 07.11.2008 DE 102008056354
(43) Veröffentlichungstag der Anmeldung: 12.05.2010
(73) Patentinhaber: Magna Car Top Systems GmbH, 74321 Bietigheim-Bissingen (DE)
(72) Erfinder: Zehnder, Frank, 71282 Hemmingen (DE)
(74) Vertreter: Völger, Silke Beatrix

(56) Entgegenhaltungen:
- DE-A1-102004 016 201
- DE-C1- 4 441 669
- US-A- 4 708 389
- US-A- 5 009 465
- US-A- 5 267 774
- US-B1- 6 353 969

## Beschreibung

Die Erfindung bezieht sich auf ein Faltverdeck mit einem Verdeckbezug für einen Personenkraftwagen, nach dem Oberbegriff des Patentanspruchs 1.

Es ist ein Verdeck eines Cabriolet-Kraftfahrzeugs bekannt, DE 10 2004 016 201 B4, das eine flexible Dachhaut aufweist. Diese Dachhaut wird von einem Verdeckgestänge getragen, das in einem rückwärtigen Bereich des Verdecks mit einem Spannbügei versehen ist. Der Spannbügel drückt bei geschlossenem Verdeck letzteres gegen eine Karosserieabschiussdichtung.

Die US 4,708,389 offenbart ein Kraftfahrzeug mit einem beweglichen Faltverdeck, dessen Verdeckbezug in einem hinteren Bereich des Faltverdecks mit einem Spannbügel gestrafft wird, und zwar in der Schließstellung des Faltverdecks. Der Verdeckbezug ist mit einem randseitigen Bezugsabschnitt unterhalb eines Aufbauträgers an einer Haltevorrichtung befestigt. Oberhalb der Haltevorrichtung wird der Spannbügel unter Zwischenschaltung des Verdeckbezugs gegen eine Dichtung gespannt, die an einem Flansch des Aufbauträgers in Lage gehalten wird.

Aus der DE 44 41 669 geht ein Faltverdeck für Fahrzeuge hervor, das mit einem flexiblen Verdeckbezug ausgestattet ist. Benachbart einem hinteren Abschnitt des Faltverdecks ist der Verdeckbezug an einem Spannbügel gehalten. Hierzu ist an einem Rand des Verdeckbezugs eine Verdickung -Keder- vorgesehen, die in einer kreisförmigen Aufnahme des Spannbügels festgelegt ist.

Es ist Aufgabe der Erfindung ein Faltverdeck mit einem Verdeckbezug für einen Personenkraftwagen zu gestalten, welcher Verdeckbezug in einem hinteren Bereich des Faltverdecks funktionsgerecht mit einem Spannbügel und einer Dichtung des Aufbaus zusammenwirkt. Dabei sollte aber auch sichergestellt sein, dass der Verdeckbezug mit Spannbügel und Halterung des Spannbügels am Aufbau aufwandsarm zu realisieren ist.

Nach der Erfindung wird diese Aufgabe durch die Merkmale des Patentanspruchs gelöst. Weitere, die Erfindung ausgestaltende Merkmale sind in den Unteransprochen enthalten.

Die mit der Erfindung hauptsächlich erzielten Vorteile sind darin zu sehen, dass der Spannbügel, der Verdeckbezug und der erste Dichtkörper durch einfache Bauteile gebildet werden, die im konstruktiven Verein eine hochwirksame Verbindung schaffen. Diese Verbindung zeichnet sich durch gute Funktion und bemerkenswerte Standzeit aus, was gerade für Faltverdecke mit hoher Betätigungsfrequenz bedeutsam ist. Dies wird durch die Art der Umschlingung des Vardeckbezugs am Spannbügel und die Aufnahmeinrichtung erreicht, die aufgrund des Verdeckbezugs, der mit letzterem verbundenen Lasche und dem auf den Verdeckbezug einwirkenden Hakenabschnitt eine musterhafte verdecktechnische Lösung bilden. Schließlich ist noch das Zusammenwirken der Stoffhalteschiene mit dem zweiten Dichtkörper und ihre Halterung an der Aufbauwand als vorbildliche Konstruktion hervorzuheben.

In der Zeichnung wird ein Ausführungsbeispiel der Erfindung gezeigt, das nachstehend näher beschrieben ist.

### Es zeigen

Fig. 1 eine schematische Schrägansicht von vorne links oben auf einen Personenkraftwagen mit einem Faltverdeck,
Fig. 2 eine schematische Schrägansicht von hinten links oben auf das Faltverdeck,
Fig. 3 eine Schrägansicht von hinten links oben auf ein Gestänge des Faltverdecks mit einer Heckscheibe,
Fig. 4 eine Schrägansicht von vorne links auf einen Dichtkörper mit Halteleiste des Faltverdecks.
Fig. 5 einen Teilmittellängsschnitt nach der Linie V-V des Faltverdecks gemäß Fig. 2 in größerem Maßstab.

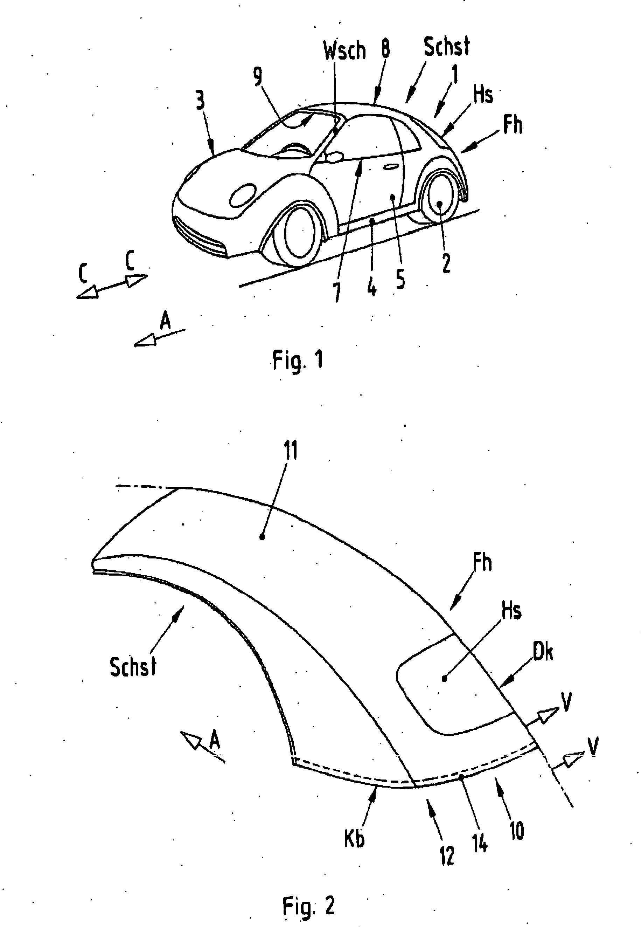

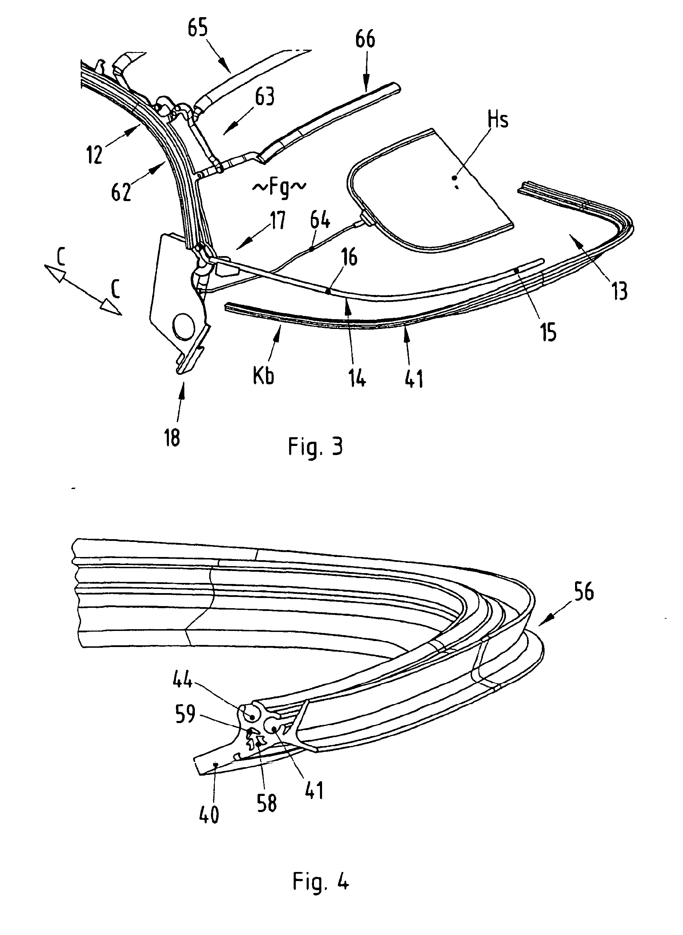

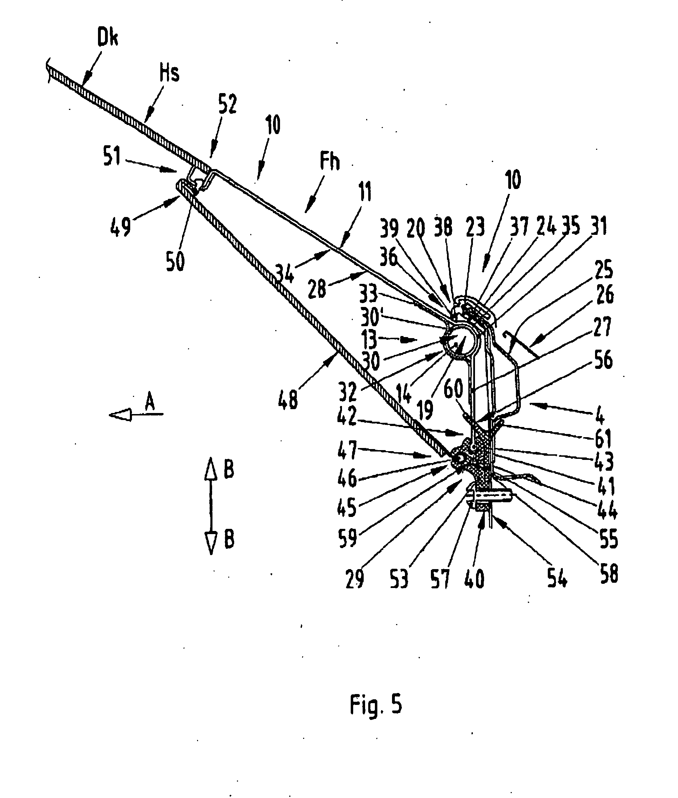

Ein Personenkraftwagen 1 weist einen von Rädern 2 getragenen Aufbau 3 mit einem Grundkörper 4 auf, der einen Windschutzscheibenrahmen Wsch und Türen 5 mit Türscheiben umfasst. Ein Fahrgastraum Fg -Fig. 3- des Aufbaus 3 wird oberhalb einer etwa horizontal verlaufenden Gürtellinie 7 von einem Faltverdeck 8 überspannt, das einerseits an einem oberen Querrahmen 9 des Windschutzscheibenrahmens Wsch -Fig. 1- und andererseits an einem hinteren Abschlussbereich 10 des Faltverdecks 8 -Fig. 5- befestigt sowie zwischen einer Schließstellung Schst und einer Offenstellung -nicht gezeigt- beweglich ist. Dabei wirkt ein Verdeckbezug 11 des Faltverdecks 8 mit einem Verdeckgestänge 12 zusammen, das in einem rückwärtigen Bereich 13 einen Spannbügel 14 umfasst.

Der Spannbügel 14 ist mit einer bogenförmigen Kontur Kb versehen, der dem Faltverdeck 8 folgt und letzteres in seiner Schließstellung Schst strafft. Von oben gesehen besitzt in der Schließstellung Schst das Faltverdeck 8 etwa horizontal ausgerichtete Spannbügel 14 in etwa U-Form mit einem Querteil 15 und Seitenteilen 16, deren freie Enden 17 an aufbaufesten Hauptlagern 18 schwenkbar gelagert sind. Der Verdeckbezug 11 des Faltverdecks 8 weist in der Schließstellung Schst von letzterem eine kuppelartige mit dem Grundkörper 4 eine Art Fließheck Fh bildende Form auf und wird im rückwärtigen Bereich 13 des Faltverdecks 8 in einem Dichtbereich 19 gegen einen ersten Dichtkörper 20 gespannt. Der erste Dichtkörper 20 umgreift mit einem Halteelement 23 einen Flansch 24 am oberen Ende eines Strukturträgers 25 des Aufbaus 3. An den Strukturträger 25 schließt ein Heckdeckel 26 des Aufbaus 3 an, welcher Heckdeckel 26 schwenkbeweglich am Grundkörper 4 des Aufbaus 3 angelenkt ist_{.}

Der Verdeckbezug 11 ist mit einer Heckscheibe Hs versehen, die in Fahrtrichtung A gesehen vor dem rückwärtigen Bereich 13 liegt, und umfasst im Dichtbereich 19 einen ersten Bezugsabschnitt 27 und einen zweiten Bezugsabschnitt 28, die im stumpfen Winkel zueinander verlaufen -Fig. 5-. Der erste aufrecht verlaufende Bezugsabschnitt 27 ist an einer Haltevorrichtung 29 befestigt, die in Fahrzeughöhenrichtung B-B betrachtet unterhalb des ersten Dichtkörpers 20 am Strukturträger 25 des Aufbaus 3 in Lage gehalten wird. Der zweite Bezugsabschnitt 27 verläuft in Richtung Heckscheibe Hs und geht in eine Dachkontur Dk über.

Der Spannbügel 14 weist einen kreisförmigen Querschnittsbereich 30 auf, der Bestandtell eines Rohres 30' mit kreisförmigem Querschnitt ist. Der kreisförmige Querschnittsbereich 30 wird von einem Umschlingungsabschnitt 31 umgeben, der zwischen den Bezugsabschnitten 27 und 28 liegt. Darüber hinaus ist an dem Spannbügel 14 eine ihn allseitig umgebende Aufnahmevorrichtung 32 vorgesehen, die durch den Verdeckbezug 11 bzw. die Bezugabschnitte 27 und 28 und eine Lasche 33 gebildet wird, die an einer Innenseite 34 des Verdeckbezugs durch Kleben, Nähen oder dgl. mit letzterem verbunden ist.

Im Dichtbereich 1θ sind zwischen dem Verdeckbezug 11 und dem ersten Dichtkörper 20 ein erster Dichtabschnitt 35 und ein zweiter Dichtabschnitt 36 wirksam. Der erste Dichtabschnitt 35 wird durch ein Tangentialelement 37 des ersten Dichtkörpers 20 gebildet, das mit dem Verdeckbezug 11 in Spannungskontakt steht. Der zweite Dichtabschnitt 36 ist mit einem Hakenelement 38 versehen, das mit einer Hakenspitze 39 in den Umschlingungsabschnitt 31 bzw. Verdeckbezug 11 eingreift.

Die Haltevorrichtung 29 umfasst eine Stoffhalteleiste 40, die eine erste ringförmige Nut 41 mit einer Verengung 42 aufweist. Die erste Nut 41 nimmt eine am freien Ende des ersten Bezugsabschnitts 27 angebrachte erste Verdickung 43 auf, wobei durch die Verengung 42 der erste Bezugabschnitt 27 hindurchgeführt ist. In die Stoffhalteleiste 40 ist noch eine zweite ringförmige Nut 44 mit einer Verengung 45 eingearbeitet. Die zweite Nut 44 hält eine zweite Verdickung 46, die an einem ersten Endbereich 47 einer Innenverkleidung 48 befestigt ist. Ein zweiter Endbereich 49 der Innenverkleidung 48 ist mit einem Klipshaken 50 versehen, der in ein Aufnahmeorgan 61 unterhalb eines Rands 52 der Heckscheibe 25 eingreift. Im Übrigen besteht die Innenverkleidung 48 wie auch der Verdeckbezug 11 aus flexiblem Werkstoff, und sie ist in der Schließstellung Schst des Faltverdecks 8 gespannt.

Die Stoffhalteleiste 40 ist mittels eines Halteabschnitts 53 an einer aufrechten Aufbauwand 54 des Strukturträgers 25 angebracht, die sich unter Vermittlung eines Trägerabschnitts mit parallelem Abstand zum ersten Bezugabschnitt 27 erstreckt. Zwischen Halteabschnitt 53 und Aufbauwand 54 ist ein Haltesteg 55 eines zweiten Dichtkörpers 56 eingespannt, wobei der Halteabschnitt 53 der Stoffhalteleiste 40 mittels Schrauben 57 an der Aufbauwand 54 befestigt ist. Der Haltesteg 55 ist mittels eines Widerhakenzapfens 58 -Fig. 4- in einer korrespondierenden Ausnehmung 59 im Halteabschnitt 53 der Stoffhalteleiste 40 festgelegt. Der zweite Dichtkörper 56 ist mit zwei Dichtlippen 60 und 61 versehen, die einen V-förmigen Querschnitt bilden. Die Dichtlippen 60 und 61 wirken mit dem ersten Bezugsabschnitt 27 und der Aufbauwand 54 dichtend zusammen.

Gemäß Fig. 3 weist das Verdeckgestänge 12 neben dem Spannbügel14, den Hauptlagern 18 noch seitliche Lenker 62 auf, die je Fahrzeuglängsseite mit einem Lenkersystem 63 versehen sind. Das Lenkersystem 63 arbeitet mit in Fahrzeuglängsrichtung C-C beabstandeten Querspriegeln 64 und 65 zusammen. Schließlich ist an den Hauptlagern 18 auch noch die Heckscheibe Hs über ein Lenkersystem 64 angelenkt, dergestalt, dass besagte Heckscheibe Hs gezielt aufgestellt und abgesenkt werden kann.

## Patentansprüche

1. Faltverdeck (8) mit einem Verdeckbezug (11) für einen Personenkraftwagen (1), das zwischen einer Schließstellung (Schst) und einer Offenstellung verstellbar ist, welcher Verdeckbezug (11) mit einem Gestänge (12) zusammenwirkt, das in einem rückwärtigen Bereich (13) des Personenkraftwagens (1) einen den Verdeckbezug (11) in der Schließstellung (Schst) des Faltverdecks (8) straffenden Spannbügel (14) besitzt, wobei der Verdeckbezug (11) an einem Dichtbereich (19) mittels des Spannbügels (14) gegen einen Dichtkörper (20) des Aufbaus (3) gespannt wird und erste (27) und zweite (28) Bezugabschnitte des Verdeckbezugs (11) einerseits an einer Haltevorrichtung (29) befestigt und andererseits in eine Dachkontur (Dk) des Faltverdecks (8) übergehen, **dadurch gekennzeichnet, dass** der Spannbügel (14) einen etwa kreisförmigen Querschnittsbereich (30) aufweist, der von einem zwischen den Bezugabschnitten (27 und 28) angeordneten Umschlingungsabschnitt (31) umgeben wird und dass der Spannbügel (14) in einer den besagten Spannbügel (14) allseitig umgebenden Aufnahmevorrichtung (32) gehalten wird.

2. Faltverdeck nach Anspruch 1, **dadurch gekennzeichnet, dass** im Dichtbereich (19) zwischen dem Verdeckbezug (11) und dem ersten Dichtkörper (20) ein erster Dichtabschnitt (35) und ein zweiter Dichtabschnitt (36) wirksam ist.

3. Faltverdeck nach Anspruch 2, **dadurch gekennzeichnet, dass** der erste Dichtabschnitt (35) durch ein Tangentialelement (37) des ersten Dichtkörpers (20) gebildet wird.

4. Faltverdeck nach Anspruch 2, **dadurch gekennzeichnet, dass** der zweite Dichtabschnit (36) ein Hakenelement (38) aufweist, der mit einer Hakenspitze (39) in den Umschlingungsabschnitt (31) des Verdeckbezugs (11) eingreift.

5. Faltverdeck nach Anspruch 1, **dadurch gekennzeichnet, dass** der Spannbügel (14) zumindest abschnittsweise durch ein Rohr (30) mit kreisförmigem Querschnitt gebildet wird.

6. Faltverdeck nach Anspruch 1, **dadurch gekennzeichnet, dass** die Aufnahmeeinrichtung (32) durch den Verdeckbezug (11) bzw. Bezugsabschnitte (27 und 28) und eine Lasche (33) gebildet wird, die an einer Innenseite (34) des Verdeckbezugs (11) durch Kleben, Nähen oder dgl. mit besagtem Verdeckbezug (11) verbunden ist.

7. Faltverdeck nach Anspruch 1, **dadurch gekennzeichnet, dass** die Haltevorrichtung (28) eine Stoffhalteleiste (40) umfasst, die zumindest eine erste ringförmige Nut (41) zur Aufnahme einer ersten Verdickung (43) am Verdeckbezug (11) ausgebildet ist.

8. Faltverdeck nach den Ansprüchen 1 und 7, **dadurch gekennzeichnet, dass** die Stoffhalteschiene (40) eine zweite ringförmige Nut (44) für eine zweite Verdickung (46) einer Innenverkleidung (47) aufweist.

9. Faltverdeck nach einem oder mehreren der vorangehenden Ansprüche, **dadurch gekennzeichnet, dass** die Stoffhalteleiste (40) mittels eines Halteabschnitts (53) an einer Aufbauwand (54) angeordnet ist, die mit Abstand zum ersten Bezugsabschnitt (27) verläuft.

10. Faltverdeck nach Anspruch 9, **dadurch gekennzeichnet, dass** zwischen Halteabschnitt (53) und Aufbauwand (54) ein Haltesteg (55) eines zweiten Dichtkörpers (56) eingespannt ist.

11. Faltverdeck nach Anspruch 10, **dadurch gekennzeichnet, dass** der Haltesteg (55) mittels eines Widerhakenzapfens (58) in einer korrespondierenden Ausnehmung (59) im Halteabschnitt (53) der Stoffhalteleiste (40) festgelegt ist.

12. Faltverdeck nach den Ansprüchen 9 und 10, **dadurch gekennzeichnet, dass** der zweite Dichtkörper (56) mit Dichtlippen (60 und 61) versehen ist, die einen V-förmigen Querschnitt bilden.

13. Faltverdeck nach Anspruch 12, **dadurch gekennzeichnet, dass** die Dichtlippen (60 und 61) mit dem ersten Bezugsabschnitt (27) und der Aufbauwand (54) zusammenwirken.

14. Faltverdeck nach Anspruch 1, **dadurch gekennzeichnet, dass** das Verdeckgestänge (12) je Fahrzeuglängsseite ein Lenkersystem (63) mit seitlichen Lenkern (62) umfasst, die mit in Fahrzeuglängsrichtung (C-C) beabstandeten Querspriegeln (64 und 65) zusammenwirken.

## Claims

1. Collapsible roof (8) with a soft top cover (11) for a passenger vehicle (1), which is displaceable between a closed position (Schst) and an open position, which soft top cover (11) interacts with a linkage (12) which, in a rear region (13) of the passenger vehicle (1), has a tensioning bar (14) tensioning the soft top cover (11) in the closed position (Schst) of the collapsible roof (8), wherein the soft top cover (11) is tensioned at a sealing region (19) against a sealing body (20) of the vehicle body (3) by means of the tensioning bar (14), and first cover sections (27) and second cover sections (28) of the soft top cover (11) are fastened at one end to a retaining device (29) and at the other end merge into a roof contour (Dk) of the collapsible roof (8), **characterized in that** the tensioning bar (14) has an approximately circular cross-sectional region (30) which is surrounded by a wrap-around section (31) arranged between the cover sections (27 and 28), and **in that** the tensioning bar (14) is retained in a receiving device (32) surrounding said tensioning bar (14) on all sides.

2. Collapsible roof according to Claim 1, **characterized in that** a first sealing section (35) and a second sealing section (36) are effective in the sealing region (19) between the soft top cover (11) and the first sealing body (20).

3. Collapsible roof according to Claim 2, **characterized in that** the first sealing section (35) is formed by a tangential element (37) of the first sealing body (20).

4. Collapsible roof according to Claim 2, **characterized in that** the second sealing section (36) has a hook element (38) which engages with a hook tip (39) in the wrap-around section (31) of the soft top cover (11).

5. Collapsible roof according to Claim 1, **characterized in that** the tensioning bar (14) is at least partially formed by a tube (30) having a circular cross section.

6. Collapsible roof according to Claim 1, **characterized in that** the receiving device (32) is formed by the soft top cover (11) or cover sections (27 and 28) and by a tab (33) which is connected on an inner side (34) of the soft top cover (11) to said soft top cover (11) by adhesive bonding, sewing or the like.

7. Collapsible roof according to Claim 1, **characterized in that** the retaining device (28) comprises a fabric-retaining strip (40) which has at least one first annular groove (41) for receiving a first thickened portion (43) on the soft top cover (11).

8. Collapsible roof according to Claims 1 and 7, **characterized in that** the fabric-retaining rail (40) has a second annular groove (44) for a second thickened portion (46) of an interior lining (47).

9. Collapsible roof according to one or more of the preceding claims, **characterized in that** the fabric-retaining strip (40) is arranged by means of a retaining section (53) on a vehicle body wall (54) running at a distance from the first cover section (27).

10. Collapsible roof according to Claim 9, **characterized in that** a retaining web (55) of a second sealing body (56) is clamped between the retaining section (53) and vehicle body wall (54).

11. Collapsible roof according to Claim 10, **characterized in that** the retaining web (55) is fixed by means of a barb stud (58) in a corresponding recess (59) in the retaining section (53) of the fabric-retaining strip (40).

12. Collapsible roof according to Claims 9 and 10, **characterized in that** the second sealing body (56) is provided with sealing lips (60 and 61) which form a V-shaped cross section.

13. Collapsible roof according to Claim 12, **characterized in that** the sealing lips (60 and 61) interact with the first cover section (27) and the vehicle body wall (54).

14. Collapsible roof according to Claim 1, **characterized in that** the roof linkage (12) comprises, for each longitudinal side of the vehicle, a link system (63) with lateral links (62) which interact with cross bows (64 and 65) which are spaced apart in the longitudinal direction (C-C) of the vehicle.

## Revendications

1. Capote escamotable (8) dotée d'un revêtement de capote (11) pour une voiture automobile (1) qui peut être déplacée entre une position de fermeture (Schst) et une position d'ouverture, lequel revêtement de capote (11) coopère avec une tringlerie (12) qui possède, dans une région arrière (13) de la voiture automobile (1), un étrier de tensionnement (14) qui tend le revêtement de capote (11) dans la position de fermeture (Schst) de la capote escamotable (8), le revêtement de capote (11) étant serré au niveau d'une région d'étanchéité (19) contre un corps d'étanchéité (20) de la carrosserie (3) au moyen de l'étrier de tensionnement (14) et des première (27) et deuxième (28) sections de revêtement du revêtement de capote (11) étant d'une part fixées à un dispositif de retenue (29) et d'autre part se prolongeant dans un contour de toit (Dk) de la capote escamotable (8), **caractérisée en ce que** l'étrier de tensionnement (14) présente une région de section transversale (30) approximativement circulaire qui est entourée par une section d'enroulement (31) disposée entre les sections de revêtement (27 et 28) et **en ce que** l'étrier de tensionnement (14) est retenu dans un dispositif de réception (32) entourant de tous côtés ledit étrier de tensionnement (14).

2. Capote escamotable selon la revendication 1, **caractérisée en ce qu'**une première section d'étanchéité (35) et une deuxième section d'étanchéité (36) sont opérantes dans la région d'étanchéité (19) entre le revêtement de capote (11) et le premier corps d'étanchéité (20).

3. Capote escamotable selon la revendication 2, **caractérisée en ce que** la première section d'étanchéité (35) est formée par un élément tangentiel (37) du premier corps d'étanchéité (20).

4. Capote escamotable selon la revendication 2, **caractérisée en ce que** la deuxième section d'étanchéité (36) comprend un élément de crochet (38) qui vient en prise à l'aide d'une pointe de crochet (39) dans la section d'enroulement (31) du revêtement de capote (11).

5. Capote escamotable selon la revendication 1, **caractérisée en ce que** l'étrier de tensionnement (14) est formé, au moins par sections, par un tube (30) de section transversale circulaire.

6. Capote escamotable selon la revendication 1, **caractérisée en ce que** le dispositif de réception (32) est formé par le revêtement de capote (11) ou les sections de revêtement (27 et 28) et une patte (33) qui est reliée audit revêtement de capote (11) par collage, couture ou similaire sur le côté intérieur (34) du revêtement de capote (11).

7. Capote escamotable selon la revendication 1, **caractérisée en ce que** le dispositif de retenue (28) comporte une nervure de retenue de toile (40) qui comprend au moins une première rainure annulaire (41) pour recevoir un premier renflement (43) sur le revêtement de capote (11).

8. Capote escamotable selon les revendications 1 et 7, **caractérisée en ce que** le rail de retenue de toile (40) comprend une deuxième rainure annulaire (44) pour un deuxième renflement (46) d'un habillage intérieur (47).

9. Capote escamotable selon l'une quelconque ou plusieurs des revendications précédentes, **caractérisée en ce que** la nervure de retenue de toile (40) est disposée sur une paroi de carrosserie (54) au moyen d'une section de retenue (53), laquelle paroi de carrosserie s'étend à distance de la première section de revêtement (27).

10. Capote escamotable selon la revendication 9, **caractérisée en ce qu'**une nervure de retenue (55) d'un deuxième corps d'étanchéité (56) est serrée entre la section de retenue (53) et la paroi de carrosserie (54).

11. Capote escamotable selon la revendication 10, **caractérisée en ce que** la nervure de retenue (55) est fixée, au moyen d'un tenon de crochet (58), dans un évidement (59) correspondant dans la section de retenue (53) de la nervure de retenue de toile (40).

12. Capote escamotable selon les revendications 9 et 10, **caractérisée en ce que** le deuxième corps d'étanchéité (56) est pourvu de lèvres d'étanchéité (60 et 61) qui forment une section transversale en forme de V.

13. Capote escamotable selon la revendication 12, **caractérisée en ce que** les lèvres d'étanchéité (60 et 61) coopèrent avec la première section de revêtement (27) et la paroi de carrosserie (54).

14. Capote escamotable selon la revendication 1, **caractérisée en ce que** la tringlerie de capote (12) comporte pour chaque côté longitudinal du véhicule un système de bielles (63) comprenant des bielles latérales (62) qui coopèrent avec des arceaux (64 et 65) espacés dans la direction longitudinale du véhicule (C-C).
